# FASCICULE DE BREVET EUROPEEN

(11) **EP 2 229 123 B1**
(45) Date de publication et mention de la délivrance du brevet: **02.03.2016**
(21) Numéro de dépôt: 08872537.9
(22) Date de dépôt: 12.12.2008
(51) Int. Cl.: A61C 7/28, A61C 7/14, A61C 19/055

(54) **PROCÉDÉ DE CONCEPTION OPTIMISÉE D'UN APPAREILLAGE ORTHODONTIQUE PERSONNALISÉ À ATTACHES STANDARD**
VERFAHREN ZUR OPTIMIERTEN KONZIPIERUNG EINER AN DEN TRÄGER ANGEPASSTEN ORTHODONTISCHEN ANWENDUNG MIT STANDARDBEFESTIGUNG
METHOD FOR THE OPTIMISED DESIGN OF A CUSTOMISED ORTHODONTIC APPLIANCE WITH STANDARD FASTENER

(30) Priorité: 13.12.2007 FR 0708683
(43) Date de publication de la demande: 22.09.2010
(73) Titulaire: Dentsply International, York PA 17405-0872 (US)
(72) Inventeur: Julie, Daniel, 13015 Marseille (FR)
(74) Mandataire: Pouillot, Laurent Pierre Paul
(86) Numéro de dépôt international: PCT/FR2008/001735
(87) Numéro de publication internationale: WO 2009/103887

(56) Documents cités:
- WO-A-2009/056776
- US-A1- 2003 152 884
- US-A1- 2004 219 473
- RAFI ROMANO , SCOTT A. HUGE, ET AL.: "Lingual Orthodontics" 1 janvier 1998 (1998-01-01), B.C. DECKER INC , CANADA , XP009104763 page 163 - page 173
- DIRK WIECHMANN ET AL.: "Customized brackets and archwires for lingual orthodontic treatment" AMERICAN JOURNAL OF ORTHODONTICS AND DENTOFACIAL ORTHOPEDICS, vol. 124, no. 5, 2003, XP009104791

## Description

L'invention vise la conception d'un appareillage orthodontique. Ici, le terme conception doit être pris au sens premier, c'est-à-dire comme désignant la formation d'un nouvel objet, tant in abstracto que matériellement.

Afin de situer l'invention, rappelons que l'orthodontie ou orthopédie dento-faciale est une spécialité dentaire ayant pour but de corriger les mauvaises positions des dents et des mâchoires en vue d'optimiser l'occlusion dentaire.

Cette mauvaise position d'origine et à corriger est dite malposition. Le positionnement corrigé de ces dents est appelé normocclusion.

Pour obtenir cette correction à fins fonctionnelles ou esthétiques, des forces sont exercées par l'appareillage sur les dents, qui en provoquent à terme le déplacement vers la normocclusion. Bien que celle-ci soit plus aisée chez un patient jeune, l'orthodontie connait un succès croissant chez les adultes.

Les forces provoquant la correction de la malposition sont obtenues par des appareillages soit amovibles (le patient peut retirer son appareil dans la journée par exemple), soit fixés à demeure le temps du traitement.

L'invention concerne les appareillages d'orthodontie fixes. Les appareillages évoqués en rapport avec l'invention sont intra-buccaux.

Pour chaque mâchoire ou arcade à corriger, un appareillage distinct est prévu (parfois les appareillages de l'arcade supérieure et inférieure sont mécaniquement liés à des fins thérapeutiques). Par simplification, la correction d'une seule arcade est discutée dans ce qui suit, bien que l'invention s'applique indifféremment à l'orthodontie d'une seule ou des deux mâchoires d'un patient.

Typiquement, les appareillages dont il s'agit ici comportent une ou plusieurs attaches, couramment appelées « brackets » en anglais.

Dans le cas de l'invention, ces attaches sont destinées à être rigidement fixées aux dents à corriger du patient. Si cette fixation s'effectue par adhésion (e.g. par collage) sur les dents d'un ensemble d'attaches pré-positionnées, on parle alors de collage indirect ou « indirect bonding » en anglais. Tel est le cas de l'invention.

Au sein du type d'appareillage évoqué maintenant, les attaches sont reliées entre elles par un ou plusieurs dispositifs, en général de forme filaire. Ces dispositifs sont appelés ici arcs, quelle que soit leur structure et formes effective. Ceux-ci font appel aux propriétés de mémoire de forme des matériaux qui les constituent, puisqu'ils sont à l'origine des forces correctrices appliquées aux dents par l'intermédiaire des attaches.

Selon que l'emplacement de fixation des attaches s'effectue sur la face externe ou interne des dents du patient, on parle respectivement d'appareillage vestibulaire ou lingual. Les exemples évoqués ici sont destinés à l'orthodontie linguale.

En général, le traitement d'un patient par orthodontie implique deux catégories de professionnels. D'abord le praticien (en général un chirurgien dentaire) qui examine le patient, pose un diagnostic et un traitement de correction. Puis le praticien relève les informations et matériaux utiles, tels qu'un moulage d'empreinte de la mâchoire en malposition.

Selon ce qui est prescrit par le praticien, l'appareillage est en général conçu (tout ou en partie du moins) par un prothésiste de laboratoire. Ensuite l'appareillage réalisé par le prothésiste selon la prescription, est livré au praticien prescripteur, qui se charge si nécessaire de la réalisation des derniers constituants de l'appareillage tels que les arcs. Puis celui-ci procède à la pose de l'appareillage fini sur le patient.

A l'heure actuelle, la technique linguale la plus reconnue se nomme C.L.A.S.S. System. Les fondements de cette technique sont décrits par exemple dans le document « Lingual orthodontics - Course syllabus (Orthodontie linguale - support de cours) » du docteur Craven Kurz, et publié par Ormco corporation en 1989 (sous la référence : Ormco Part No. 070-5069).

Citons à ce stade d'autres documents de l'art antérieur, relatifs au domaine de l'orthodontie.

Le document US4337037 décrit un appareil fixe d'orthodontie linguale pour l'arcade maxillaire. Une pluralité de tubes et attaches en métal ou plastique qui sont prévues pour être collées sur les surfaces linguales des dents dont la position est à corriger. Ces attaches sont reliées par un arc (en anglais « arch wire »). Elles possèdent chacune une gorge apte à recevoir l'arc de traitement.

Le document US6612143 décrit un robot de pliage automatisé d'arcs d'appareillages d'orthodontie. Des outils de pliage et d'accrochage sont pilotés en fonction de données numériques. Des modélisations numériques matricielles définissent à partir de modèles numériques de la dentition équipée d'attaches, les formes à donner à l'arc.

Le document US6776614 décrit un système modulaire pour appareillage d'orthodontie sur-mesure. Au lieu d'employer des attaches existantes, ce document propose l'élaboration industrielle d'attaches et d'un arc, les premiers étant entièrement réalisés à l'unité, par prototypage puis moulage en fonction des besoins du patient tels que traduits par un programme d'ordinateur. Au besoin, des meulages ou découpes au laser complémentaires au moulage permettent d'ajuster les formes des attaches et arcs ainsi réalisés.

Le document WO2007120920 décrit la production de modèles numériques de dents de patients pour fabriquer des gouttières finales sans arc, correspondant à la position corrigée et des gouttières sans arc de traitement intermédiaire.

On voit que les documents récents tendent à trouver des alternatives à la technique C.L.A.S.S. System, soit avec des appareillages amovibles types gouttières thermoformées, soit avec des implants en métal. Soit encore en réalisant unitairement et sur mesure l'ensemble de l'appareillage d'orthodontie, y compris les attaches et arcs.

Le document WO2009056776 décrit une technique orthodontique telle qu'un arc orthodontique permet de faire trouver une position corrigée à des dents. Pour amener chaque dent dans sa position corrigée, un effort est transmis par l'intermédiaire d'une attache, d'une pièce intermédiaire et d'une base. Ce document prévoit la formation par une méthode numérique, individuellement, d'un ensemble formé par une base, une attache et d'une partie intermédiaire

Le document FAFI ROMANO, SCOTT A. HUGE et al : « Lingal orthodontics » 1 janvier 1998 (1998-01-01), B.C. DECKER INC, Canada, XP009104763 décrit un procédé de conception d'un appareillage d'orthodontie avec au moins deux attaches destinées aux faces linguales de dents antérieures, et un arc de liaison de ces attaches. Ce document ne décrit pas de représentation numérique d'une maquette, ni la localisation depuis cette représentation, d'un plan de passage de gorges. Ce document ne décrit pas non plus d'attaches produites par homothétie, ni de modèle de jauge antérieure fabriquée par ordinateur.

Le document DICK WEICHMANN et al : « Customized brackets and archwires for lingual orthodontic treatment » décrit l'emploi de la fusion informatique de deux procédés de fabrication et positionnement d'attaches d'orthodontie, pour leur adaptation au patient.

Le document US2004219473 décri un appareillage d'orthodontie avec des surfaces de liaison profilées. Le positionnement en bouche du patient de cet appareillage d'orthodontie peut être calculé par ordinateur. Des logiciels d'analyse de l'appareillage d'orthodontie et de la dentition du patient peuvent être employés. Des lignes de crayon 32 sur une maquette physique sont décrites.

Le document US2003152884 décrit la production assistée par ordinateur d'un appareillage d'orthodontie sur mesure, dont chaque attache possède une forme définie en fonction de la dentition du patient. Un arc est formé sur mesure, et est illustré avec diverses courbures variées.

Pour sa part, l'invention vise à préserver autant que faire se peut les acquis des praticiens notamment en recourant à des attaches usuelles, tout en améliorant d'une part le travail en laboratoire et d'autre part les prestations fournies au praticien notamment en termes de précision des appareillages et de délai de livraison.

Avec la technique C.L.A.S.S. System qui est à la base de l'invention, une maquette de simulation de traitement appelée « Set Up » en langue anglaise, est fabriquée avec des dents dans la normocclusion prévue en fin de traitement.

Des jauges de maintien provisoire d'attaches sont choisies parmi une collection de jauges disponibles, puis sont solidarisées à un paralléliseur.

On verra que le choix de ces jauges est primordial. En laboratoire, la collection parmi laquelle ce choix est effectué ne comporte que quelques jauges, dont chacune correspond à une courbure courante d'une implantation locale de dents.

Notamment pour la jauge antérieure, le choix revient à sélectionner celle qui épouse au mieux le profil des faces linguales des incisives.

C'est là d'ailleurs l'un des principaux inconvénients de la technique actuelle, que l'invention pallie.

En effet, non seulement ce choix est effectué visuellement par le technicien prothésiste, ce qui peut être source d'imprécisions diverses. Mais de plus, l'éventail qu'offre la collection est en général assez limité.

De fait, lors du montage des attaches sur les faces linguales de la malposition, il est courant qu'un espacement pouvant atteindre plus de 2mm soit maintenu entre l'attache et la face linguale correspondante. Or, on cherche en pratique à ce que cet espacement soit le plus petit possible afin de limiter les imprécisions.

En laboratoire, cet espacement est comblé avec un tampon de calage, souvent sous forme d'un apport de colle. Le but est de permettre au praticien de travailler avec un arc dont la courbure est uniformément curviligne.

En outre, ce choix comportant des phases visuelles et manuelles, il peut engendrer des erreurs de positionnement.

On comprend déjà que le tracé de l'arc à obtenir doit correspondre au mieux au parcours linéaire évoqué plus haut.

A cette fin, on réalise en laboratoire une photocopie de la maquette de simulation équipée des attaches, puis on reporte le tracé visible sur la photocopie pour dessiner l'arc destiné au patient. Le dessin obtenu servira de modèle au praticien orthodontiste pour confectionner physiquement l'arc destiné au patient à partir d'un fil possédant les propriétés nécessaires.

Ceci également peut être source d'erreurs et d'imprécisions indésirables.

De plus, les temps de réalisation des différentes étapes aboutissant à un appareillage prêt à la pose, sont relativement longs du fait de leur complexité. Tandis qu'elles impliquent de recourir à un technicien prothésiste hautement qualifié pour leur réalisation, ce qui là encore grève les coûts.

L'invention vise donc à pallier ces inconvénients notamment.

A cet effet, un premier objet de l'invention vise un procédé de conception d'un appareillage d'orthodontie défini par la revendication 1, notamment. L'appareillage est du type comportant au moins deux attaches prévues pour être rigidement fixées à des faces linguales de dents antérieures dont la position est à corriger, et un arc auquel sont reliées ces attaches ; ce procédé comprenant les étapes prévoyant de réaliser une cartographie de la dentition à corriger puis à partir de cette cartographie, de produire une maquette de simulation d'une position corrigée de la dentition ; les attaches étant choisies au sein d'un catalogue d'attaches prêtes à poser, et possédant chacune une gorge d'ancrage destinée à recevoir l'arc.

Selon un exemple, suite à la réalisation de la cartographie ainsi que la maquette de simulation, sont opérées à partir d'une représentation numérique de la maquette, la localisation en élévation d'un plan de passage des gorges d'ancrage, plan dont l'orientation est prescrite, ainsi que la recherche d'une courbure optimisée ; les attaches sont alors virtuellement montées avec leur gorges en concordance avec la courbure optimisée ; un profil de l'arc est alors produit par homothétie de la courbure dans le plan de passage localisé, en fonction d'une épaisseur utile des attaches au fond de gorge ; puis un modèle de jauge antérieure est conçu avec le profil d'arc produit par homothétie, avant que cette jauge antérieure ne soit physiquement fabriquée par production assistée par ordinateur, à partir de ce modèle.

Selon des réalisations de l'invention, la cartographie ainsi que la maquette de simulation sont virtuelles, c'est-à-dire réalisées de manière numérique.

Le procédé en question est tel que parfois l'étape de réalisation de la cartographie comporte une phase de saisie in vivo et / ou à partir d'un modèle physique tel que moulage, de la ou des arcades à traiter, par exemple à l'aide d'une station de radiographie et / ou d'un numériseur 3D contrôlé par un logiciel de conception assisté par ordinateur.

Ce procédé est parfois tel que l'étape de réalisation de la cartographie comporte une phase d'individualisation des dents de l'arcade, par exemple avec l'attribution d'un repère propre à chaque dent impliquée dans le traitement.

Selon une réalisation de ce procédé, la phase de localisation du plan de passage des gorges en élévation sur la représentation numérique de la maquette, est opérée d'abord par détermination de trois points de franchissement des faces linguales des dents en fonction de l'encombrement des attaches ainsi que des efforts que ces attaches sont appelées à exercer sur ces dents, puis par construction d'un plan de passage séquent à ces points de franchissement.

Selon des mises en oeuvre de ce procédé, la phase de recherche de la courbure optimisée s'effectue dans le plan de passage, à partir d'une bibliothèque de courbes à symétrie antéropostérieure et suivant lesquelles le matériau de l'arc de l'appareillage peut être uniformément conformé, par exemple ces courbes étant des arcs de fonctions du second degré telles que cercle, ellipse, chaînette c'est-à-dire vélaire ou analogues ; la courbure élue venant en contact avec les faces linguales de la représentation de la maquette par au moins trois points mitoyens à ces faces.

Dans une mise en ouvre du procédé, la phase de recherche de la courbure optimisée s'effectue à partir de l'exportation de données par exemple sous forme de fichier correspondant à la représentation numérique de la maquette vers un système de conception assistée par ordinateur, puis par l'ancrage en mode projection dans le plan de passage, d'abord de deux points d'extrémité de la courbure optimisée par exemple à proximité de dents antérieures telles que les canines, puis d'un point de rebroussement à proximité de - voire sur - l'axe de symétrie antéropostérieure de l'arcade.

Selon une réalisation de ce procédé, l'étape de montage virtuel des attaches s'effectue à partir de données propres à chaque attache qui définissent au moins la disposition relative du fonds de gorge d'ancrage et de la face antérieure de montage de cette attache sur sa face linguale de destination ; ce montage permettant de définir l'orientation autour d'un segment de réception de la courbure de l'attache en place et donc l'épaisseur utile de cette attache.

Dans une réalisation, l'étape de production du profil d'arc s'opère à partir du choix d'un type de fil de traitement en termes de propriétés de son matériau constitutif, de ses dimensions et de son mode de mise en forme, par homothétie de rapport en réduction avec la construction d'un point en retrait postérieurement suivant l'axe de symétrie antéropostérieure à une distance sensiblement égale à l'épaisseur utile d'une attache antérieure. Cette étape est opérée à l'aide d'un système de conception assistée par ordinateur.

Suivant un mode de réalisation, l'étape de production du profil d'arc comporte l'intégration postérieurement à l'emplacement d'attaches antérieures, d'un à trois secteurs linéaires raccordés à l'arc, de part et d'autre du plan de symétrie antéropostérieur. Par exemple, ces secteurs linéaires sont étendus en regard et au contact de représentations numériques de dents antérieures.

Selon des réalisations, ce procédé comporte suite à l'étape de montage virtuel des attaches en concordance avec la courbure optimisée, une phase de solidarisation statique des données propres de ces attaches avec celles déterminées l'étape de production pour le profil d'arc, puis une phase d'ajustement fin, éventuellement incrémentale, de leur situation relativement à la représentation numérique de la maquette notamment par déplacement en élévation principalement par remontée, voire en ingression suivant l'axe de symétrie antéropostérieur. Par exemple, la phase d'ajustement fin opère un déplacement de l'ordre de 0.3 à 0.4 mm.

Selon un exemple de l'invention, l'étape de conception de la jauge frontale est obtenue en reproduisant la partie antérieure du profil d'arc avec une dimension radiale à proximité de ses extrémités distales qui est sensiblement identique à la dimension équivalente des gorges des attaches correspondantes. Par exemple, cette dimension est de l'ordre de 0.18 à 0.22 inches, soit 0.045 à 0.055 mm. En outre, des moyens de fixation compatibles avec un paralléliseur ou analogues sont reliés au profil d'arc.

Dans une mise en oeuvre, l'étape de conception de jauge comporte l'insertion d'un marquage tel qu'orifice traversant et / ou d'un détrompeur tel que saillie complémentaire, en regard de l'emplacement d'au moins une voire de chaque attache à monter sur une jauge donnée ; notamment dans une jauge fabriquée par usinage, un détrompeur en saillie complémentaire est réalisé par surmoulage apte à épouser des formes de l'attache, par exemple ce détrompeur surmoulé est étendu de part et d'autre du plan de passage voire traverse un orifice de la jauge venue d'usinage

Dans une réalisation, l'étape de fabrication de la jauge frontale est opérée par moulage et / ou usinage assisté par ordinateur, par exemple en reproduisant le profil d'arc à l'aide d'une station de prototypage 3D par moulage et / ou d'un centre d'usinage à commande numérique.

Encore un objet de l'invention est un équipement apte à mettre en oeuvre le procédé exposé plus haut, défini par la revendication 15..

L'invention est exposée en détails dans la description qui suit, et se réfère aux dessins annexés dans lesquels :
- la figure 1 est une vue vue schématique en perspective d'un patient dont on détermine une cartographie de la dentition en vue d'un traitement d'orthodontie ;
- la figure 2 est une vue schématique en perspective qui montre une empreinte ou moulage de cartographie d'une arcade dentaire devant faire l'objet d'un traitement d'orthodontie, un repérage unitaire étant couplé aux moulage de dents, afin de permettre leur individualisation et ultérieurement leur replacement au sein d'une maquette de simulation ou « set up » ;
- la figure 3 est une vue schématique d'un détail d'une maquette de simulation, à partie de laquelle est extraite une représentation numérique de i'arcade en question après que les dents le nécessitant ait été replacées dans la position à laquelle vise l'orthodontie ;
- la figure 4 est une vue schématique en perspective d'une représentation numérique selon l'invention de cartographie d'une arcade dentaire, où est visible en trait double plein et discontinu, un plan de passage en cours de localisation préalable ;
- la figure 5 est une vue en plan de dessus d'une représentation numérique d'arcade où est visible une courbure optimisée de construction ainsi qu'un tracé homothétique qui définissent conjointement un fil de traitement symétrique par rapport à un axe antéropostérieur de cette arcade, ce fil possédant postérieurement à un profil d'arc conforme à l'invention, des secteurs postérieurs rectilignes en regard des prémolaires et molaires ;
- la figure 6 est une vue latérale d'élévation d'une dent équipée d'un appareil d'orthodontie avec attache fixée par une cale de collage, et qui illustre les fonds de gorge, l'intersection avec le plan de passage et donc l'épaisseur utile de l'attache ;
- la figure 7 est une demie vue similaire à la figure 5 qui montre le montage virtuel des attaches d'un appareillage en cours de conception selon l'invention, lors d'une phase d'ajustement fin par déplacement de l'ensemble attaches-fil de traitement par rapport à la représentation numérique de l'arcade ;
- la figure 8 est une vue schématique en plan de dessus d'un jeu de jauges fabriquées selon l'invention pour une arcade supérieure, avec une jauge antérieure compatible avec un paralléliseur et quatre jauges postéro-latérales standard ; la jauge antérieure comportant des orifices et détrompeurs de placement des attaches correspondantes ;
- la figure 9 est une vue schématique en perspective qui illustre un moulage de dent revêtu d'une coque de prise d'attache en vue du report conjoint (attache et coque) sur un moulage de malposition ;
- la figure 10 est similaire à la figure 7, et montre un jeu d'attaches reportées sur un moulage en malposition et élimination des coques de prise en résine ; et
- la figure 11 est une vue schématique en plan de dessous d'une gouttière de report en silicone, destinée à permettre à un praticien le collage indirect de l'ensemble des attaches qu'il regroupe sur les faces linguales de dents d'un patient.

Sur certaines des figures, on voit des axes référentiels X, Y et Z. Ces axes définissent un repère orthonormé en fonction duquel les différents constituants de l'invention sont décrits dans leur contexte.

Ainsi, l'axe X est dit antéropostérieur. Il est souvent confondu avec un axe de symétrie des arcades dentaires ou ensembles d'orthodontie.

A partir de cet axe antéropostérieur X, une direction Y transversale rejoint des dents similaires, par exemple les deux canines supérieures de part et d'autre d'une arcade donnée.

Enfin, l'axe Z est dit d'élévation, et est perpendiculaire aux deux axes X et Y précédents. Cet axe Z définit les parties supérieure et inférieure des objets évoqués ici.

En se reportant à ces figures, et afin d'éclaircir ce qui précède, revenons brièvement à la technique C.L.A.S.S. System qui est à la base de l'invention.

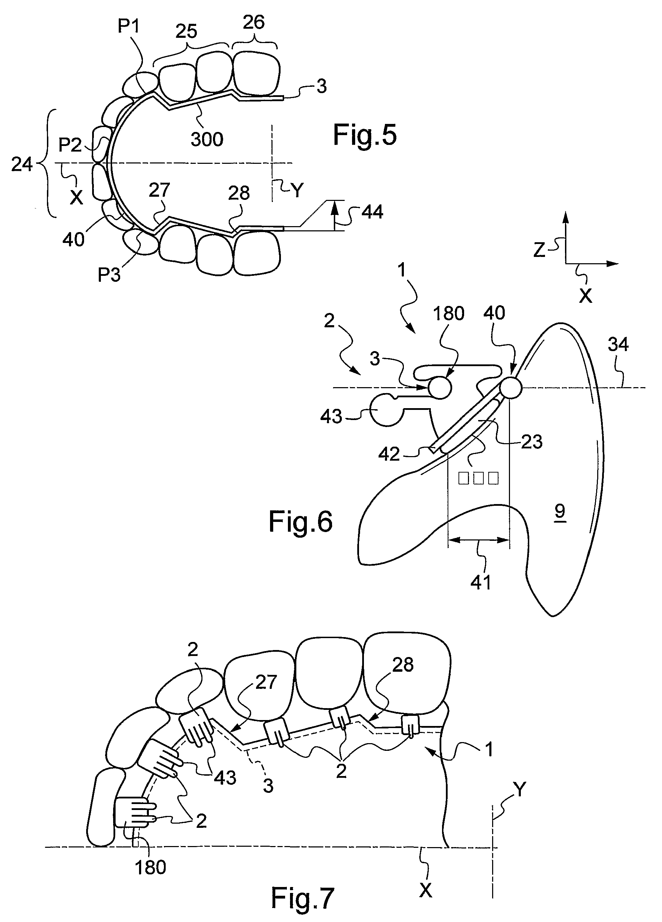

Selon cette technique, les étapes classiques aboutissant à la pose d'un appareillage 1 (représenté succinctement aux figures 6 ou 7) d'orthodontie linguale fixe par collage indirect, se déroulent synthétiquement comme suit. Comme on l'a vu, un tel appareillage 1 comporte une pluralité d'attaches ou « brackets » 2, et un arc 3 de forme filaire qui relie entre-elles les attaches 2.

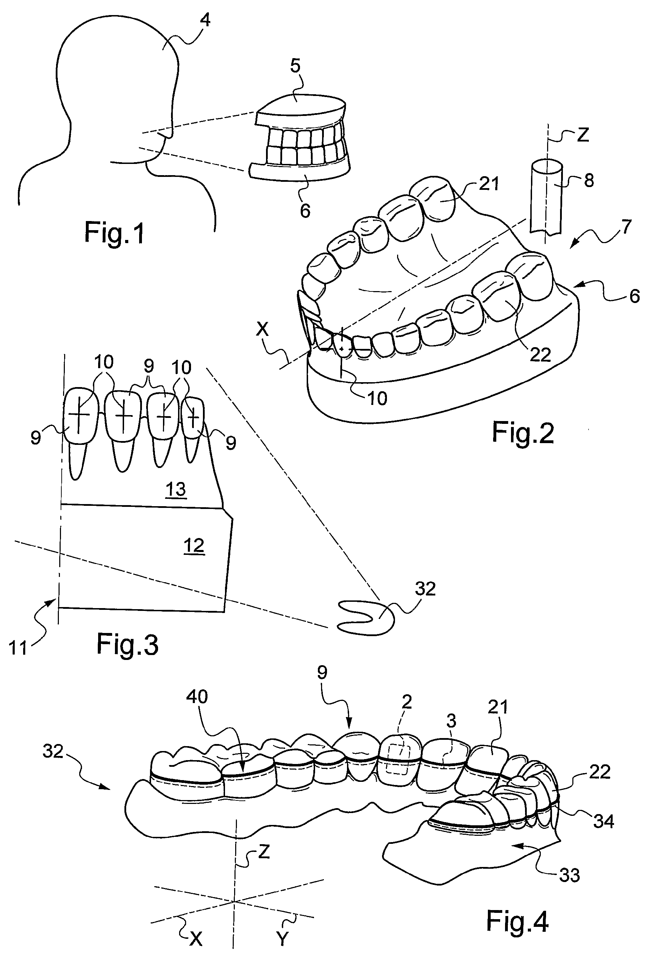

En préalable, un praticien pose le diagnostic d'une orthodontie pour un patient 4 tel que celui qui est visible sur la figure 1.

Alors, un moulage de chaque arcade 5 (supérieure) et 6 (inférieure) à corriger tel que celui qui est représenté en 7 sur la figure 2, est pris par le praticien. Egalement, celui-ci obtient en général une radiographie, et de plus en plus souvent une restitution numérique de cette arcade 5 ou 6.

Notons qu'à l'heure actuelle, ces clichés ou restitutions sont exclusivement utilisées par les praticiens, à des fins diagnostiques. Quant à leur usage par les prothésistes de laboratoire, il se limite le plus souvent à un complément de visualisation. On a vu que des industriels fabriquent des attaches et arcs entièrement sur mesure à partir de pareilles restitutions.

Par simplification on parle ici de cartographie qu'il s'agisse d'une empreinte matérielle typiquement en plâtre (moulage 7), ou d'une restitution sous forme d'image numérisée d'une arcade 5 ou 6. Une cartographie initiale représente donc la malposition des dents du patient 4.

Comme on l'a vu avant, le praticien transmet au laboratoire la prescription et la cartographie en vue de la fabrication de l'appareillage 1.

Au laboratoire, deux moulages 7 de l'arcade sont réalisés si nécessaire, en général en plâtre. L'un de ces moulages 7 est couplé ensuite à un paralléliseur 8 (représenté succinctement sur la figure 2), qui sert de socle de repérage.

En se reportant aux figures 2 et 3, on voit que chaque dent 9 devant être impliquée dans le traitement est alors dotée d'un repère 10 propre (par rapport au paralléliseur 8), apte à définir dans les trois dimensions X, Y et Z de l'espace sa position initiale (puis si nécessaire une position post-traitement).

Egalement, une attache 2 appropriée est choisie sur catalogue (et selon les habitudes du praticien) pour chaque dent 9 dont la position est à corriger.

Comme illustré sur la figure 3, une maquette 11 de simulation de traitement (ou du moins d'une étape prochaine de celui-ci) est physiquement réalisée à une étape postérieure.

Comme on l'a vu, c'est cette maquette 11 qui est appelée « Set Up ». Les dents 9 dont la position est à corriger y sont en position issue du traitement (e.g. normocclusion).

Classiquement, cette maquette 11 comporte une embase 12 (ici une partie inférieure du moulage 7 en plâtre), les dents 9 dont la position est à corriger (en général elles aussi issues du même moulage 7). Une couche 1 3 de matière à propriétés plastiques telle que de la cire dentaire (par exemple une cire à modeler comme celle proposée par Prodont-Holliger sous la dénomination SV Prima-Hiver) est interposée entre embase 12 et les dents 9.

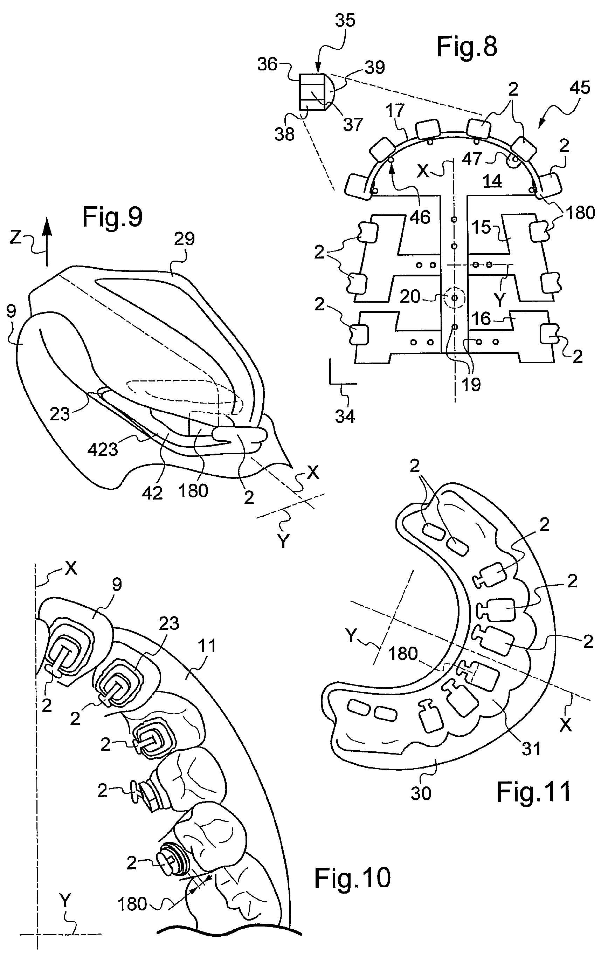

Intervient à ce moment une étape de choix d'une première jauge de maintien d'attaches parmi une collection de jauges disponibles. D'autres jauges dites secondaires, sont aussi choisies, avant d'être solidarisées au paralléliseur. Seules sont représentées sur la figure 8, des jauges 14, 15 et 16 conformes à l'invention.

Qu'il s'agisse de l'invention ou des techniques classiques, la première jauge 14 est d'importance, puisqu'il s'agit de la jauge antérieure destinée au maintien des attaches 2 d'orthodontie des dents antérieures du patient 4, c'est-à-dire des incisives et/ou canines.

Les jauges 15 et 16 secondaires sont dédiées aux prémolaires et / ou molaires. Selon les cas, une jauge secondaire est dédiée exclusivement à une prémolaire ou aux molaires. Parfois une même jauge secondaire est dédiée conjointement à deux (voire trois) groupes de dents, par exemple canine et prémolaire (plus molaires).

Ainsi, selon l'appareillage 1 à réaliser, trois à sept jauges sont impliquées. Outre la première jauge 14, deux jauges 15 latérales ou secondaires sont quasi systématiquement nécessaires.

Quelle que soit sa position, chaque jauge 14-16 comporte d'une part une rainure extérieure 17, de forme complémentaire à une gorge d'ancrage 180 de chaque attache 2.

C'est cette même gorge 180 d'ancrage qui recevra l'arc 3 qui exercera les forces transmises aux dents 9 par les attaches 2 dans l'appareillage 1 finalisé.

A l'opposé de la rainure 1 7, c'est-à-dire à la partie antérieure ou intérieure d'une jauge 14-16, cette dernière (14-16) comporte des moyens 19 de fixation au paralléliseur 8.

Pour la première jauge 14 par exemple, la rainure 17 est antérieure et les moyens 19 de fixation postérieurs. Ces moyens 19 sont fréquemment de simples perçages (comme sur la figure 8) à travers lesquels passeront des ensembles (schématisés en 20) de serrage par exemple par vis-écrou.

En aparté, rappelons pour la bonne forme que les faces linguales (désignées en 21 sur la figure 2), sont opposées aux faces vestibulaires (désignées en 22 sur la figure 2).

Revenons maintenant sur le choix de la première jauge 14, qui est primordial. En pratique, la collection parmi laquelle ce choix est effectué ne comporte que quelques jauges (14) dont chacune correspond à une courbure courante de l'implantation des incisives de patients 4.

Par approches successives et en fonction de son expérience, le prothésiste de laboratoire recherche parmi la collection limitée dont il dispose, la jauge 14 qui lui semble la mieux adaptée.

Plus précisément, ce choix consiste en la sélection visuelle de la jauge 14 dont la courbure de la rainure 17 externe accomplit le nombre le plus élevé de points de contact avec la face antérieure (linguale) des incisives en question. Autrement dit, est choisie comme première jauge 14 celle qui épouse au mieux le profil des faces linguales des incisives. Ceci peut être source d'imprécisions diverses.

De fait, il est courant qu'un espacement pouvant atteindre plus de 2mm soit maintenu entre la face antérieure de montage (désignée en 423 sur les figures 6 et 9) de l'attache 2 et la face 21 linguale de l'incisive correspondante.

Or, on cherche en pratique que cet espacement soit le plus petit possible afin de limiter les imprécisions ou les erreurs de positionnement.

Une fois le choix de la première jauge 14 effectué, les autres jauges (1 5-16 par exemple) sont à leur tour choisies en fonction de l'appareil 1 à réaliser.

Quand toutes les jauges (14-16) sont choisies, celles-ci sont fixées sur le paralléliseur 8. Suite à quoi l'ensemble des attaches 2 nécessaires sont montées physiquement sur les jauges 14-16 correspondantes et rapprochées de la maquette 11 de simulation. Ceci fait apparaitre l'espacement évoqué précédemment.

A ce stade, les faces linguales 21 des moulages de dents 9 de la maquette 11 de simulation en particulier sont revêtues d'une fine couche de produit anti adhésif. Ce produit est souvent hydrosoluble afin de faciliter la séparation ultérieure, et on emploie par exemple un vernis de la marque Ivoclar.

Alors, l'espacement entre la face linguale 21 et la face antérieure 423 de montage de l'attache 2 en regard sur sa jauge 14 est comblé avec un tampon 23 de calage (visible sur la figure 6).

Ce tampon 23 est souvent sous forme d'un apport de colle. Le but est de permettre au praticien de travailler lors de la pose de l'appareillage 1, avec un arc 3 dont la courbure est uniforme.

Couramment, il s'agit d'un adhésif sous forme de résine polymérisable aux UV (Ultra-violets) et contenant des monomères acrylates, comme par exemple la colle 3M Unitek Transbond TX. D'autres colles, par exemple polymérisables sans exposition aux UV sont parfois employées.

Il est procédé de même pour l'ensemble des jauges 14-16 de l'appareillage 1.

Dès lors, les fonds de chacune des gorges 180 d'ancrage des attaches 2 devraient définir un parcours linéaire. Du fait des espacements entre faces linguales 21 et faces antérieures de montage notamment, ce tracé n'est pas toujours suffisamment régulier avec la technique classique.

Ce parcours linéaire comporte un tronçon central curviligne en regard des incisives, et un ou plusieurs tronçons contigus de part et d'autre postérieurement du tronçon curviligne. Il dessine un parcours unitaire, l'arc 3 final en résultant étant lui-même d'un seul tenant en général.

Bien que la figure 5 montre les tracés de ces différents tronçons tels que définis selon l'invention et non suivant les techniques conventionnelles, cette figure permet de se représenter leur agencement et forme.

Sur la figure 5, l'arc 3 issu du parcours linéaire comporte de part et d'autre d'un tronçon 24 curviligne antérieur, deux tronçons postérieurs 25 et 26. Le premier tronçon 25 est étendu contre les faces linguales (21) des prémolaires et premières molaire, et (vers l'arrière) le second tronçon 26 en regard des faces linguales de molaires antérieures. De part et d'autre transversalement de l'axe de symétrie antéropostérieur (en général confondu avec l'axe X sur les figures), l'arc 3 possède donc une partie latérale du tronçon antérieur 24, raccordé successivement à un tronçon postérieur 25 intermédiaire et un tronçon postérieur 26 d'extrémité.

Entre les tronçons 24 et 25, ainsi qu'entre les tronçons 25 et 26, l'arc présente un décrochement 27 et 28 (respectivement) de chaque côté de l'axe X. A chacun de ces décrochements 27 et 28, l'arc dessine une forme en « Z » bien visible sur la figure 5.

Qu'il s'agisse d'arcs 3 conventionnels ou conformes à l'invention, on retrouve sensiblement ces formes, bien qu'elles varient selon les prescriptions. Et aussi selon les besoins d'appuis, puisque les attaches 2 fixées aux dents 9 postérieures ont parfois pour fonction de servir d'appui stable, seules des dents 9 antérieures étant alors à déplacer grâce à l'appareillage 1.

A ce stade, la technique conventionnelle aboutit alors aux étapes suivantes. Une fois les attaches 2 solidarisées à la maquette de simulation, les jauges 14-16 sont démontées.

On comprend déjà que le tracé conventionnel de l'arc 3 à obtenir doit correspondre au mieux au parcours linéaire évoqué plus haut. A cette fin, on réalise en pratique une photocopie de la maquette 11 de simulation équipée des attaches 2, puis on reporte le tracé conventionnel visible sur cette photocopie pour dessiner l'arc 3 destiné au patient 4.

Le dessin obtenu servira de modèle au praticien pour confectionner physiquement l'arc 3 destiné au patient 4, à partir d'un fil possédant les propriétés (mémoire de forme notamment) nécessaires.

Afin de faciliter le transfert des attaches 2 depuis la maquette 1 (Set Up) vers les dents 9 du moulage 7 de malposition, mais également pour protéger ces ensembles dents 9 / attaches 2, cet ensemble est -en partie- recouvert par une coque 29 de protection illustrée sur la figure 9.

Ces coques 29 sont ici en résine. Elles sont initialement disposées de manière à recouvrir unitairement chaque dent 9 de la maquette 11 qui est pourvue d'une attache 2. D'ailleurs, la partie de ces attaches 2 en contact avec la face linguale 21 des dents 9, ainsi que le tampon 23 de calage, sont partiellement englobées par ces coques 29 de transfert.

Dans les exemples illustrés, on emploie pour ces coques 29 des résines méthacrylate de méthyle photo polymérisables ou acrylique chimiquement polymérisables. Tel est le cas du produit Pattern Resin LS, de la société GC Dental.

Grâce au revêtement anti adhésif préalablement déposé sur les dents 9 de la maquette 11 avant que n'y soient collées des attaches 2, ces dernières (2) sont ensuite désolidarisées de la maquette 11 conjointement à leurs coques 29 de transfert.

Une fois libérées de la maquette 11 de normocclusion, les attaches 2 recouvertes des coques 29 sont disposées respectivement sur la dent 9 correspondante d'un moulage 7 physique représentant la malposition (c'est-à-dire de l'arcade 5 ou 6 à traiter du patient 4 dans son état actuel).

Ici à nouveau, conventionnellement on a déposé à l'avance un revêtement anti adhésif sur le moulage 7 de malposition, puis au collage des attaches 2 avec un produit idoine, tel que ceux évoqués.

Ce collage sur la malposition s'effectue bien sur en respectant le positionnement initial des attaches 2 défini sur la maquette 11 de normocclusion, grâce à ces coques 29 de transfert.

C'est à ce moment qu'on procède au démontage des coques 29 des attaches 2 disposées sur le moulage 7 de malposition.

Ensuite, conventionnellement une gouttière 30 de transfert (telle que celle de la figure 11) est ensuite produite. Celle (30) de la figure 11 est en silicone (tel que Xantoprene et Optosil) et regroupe l'ensemble des attaches 2. Elle comporte également une empreinte 31 concave complémentaire à la dentition actuelle (malposition) de l'arcade (5 ou 6) du patient 4 sur laquelle ces attaches 2 doivent être installées.

C'est alors qu'on procède au nettoyage des coques 29, en général par micro sablage. Le résultat est représenté par exemple par la figure 10.

On reconnait là la technique du collage indirect. L'utilité de cette gouttière 30 est en effet de permettre au praticien le report et le collage en une seule opération, des attaches 2 sur les dents de son patient 4.

En parallèle, l'arc 3 correspondant est confectionné à partir de la photocopie du tracé obtenu sur la maquette 11 en normocclusion des dents 9. Au montage sur le patient, l'arc 3 est éloigné de ce tracé, ce qui engendre les forces qui tendront à déplacer les dents réelles vers la normocclusion.

La technique conventionnelle étant exposée, décrivons maintenant l'invention. Dans ce qui suit, les éléments équivalents à ceux -conventionnels- déjà exposés, sont désignés par les mêmes références.

Donc, l'invention vise tout comme la technique C.L.A.S.S. system, notamment un procédé de conception d'un appareillage 1 d'orthodontie, du type comportant (au moins deux mais le plus souvent 10 à 14) attaches 2 prévues pour être rigidement fixées à des faces 21 linguales de dents 9 - notamment antérieures- dont la malposition est à corriger.

L'appareil 1 obtenu avec l'invention possède également un arc 3 auquel sont reliées ces attaches 2.

Tout comme dans les techniques usuelles, ce procédé comprend les étapes prévoyant de réaliser une cartographie 32 de la dentition à corriger, comme ceci est illustré aux figures 1 à 4 notamment.

Puis à partir de cette cartographie 32, de produire une maquette 11 de simulation de la normocclusion (position corrigée) de la dentition.

Contrairement aux alternatives récentes qui proposent des attaches et arcs sur mesure produits industriellement, les attaches 2 sont ici choisies au sein d'un catalogue d'attaches 2 prêtes à poser, c'est-à-dires courantes. Mais il est aisé avec l'invention d'intégrer de nouveaux types d'attaches 2.

Bien sûr, chacune des attaches 2 possède une gorge 180 d'ancrage destinée à recevoir l'arc 3, comme on le voit bien aux figures 6 à 9.

Selon l'invention, suite à la réalisation de la cartographie 32, ainsi que de la maquette 11 (Set Up), sont opérées à partir d'une représentation 33 (figure 4) numérique de la maquette 1 1 , la localisation en élévation (X) d'un plan de passage 34 (figures 4, 6 ou 8) des gorges 180 d'ancrage. Ces gorges 180 ont une orientation prescrite.

Cette localisation du plan 34 vise à placer celui-ci en regard de parties des faces linguales 21 qui offrent les conditions d'accueil les meilleures pour les attaches 2 destinées à y être collées.

Ces conditions d'accueil optimisées intègrent notamment l'étendue des surfaces disponibles sur ces faces 21 relativement à celles des attaches 2.

Sont aussi pris en considération pour la localisation, les formes (en saillies et / ou concavités) de ces faces, en rapport avec les positions et efforts prévus pour les attaches 2.

On verra plus loin que la figure 6 expose mieux la structure de ces attaches 2, et donc les besoins des faces 21 devant les recevoir.

Notons ici que selon des réalisations, la cartographie 32 ainsi que la maquette 11 de simulation sont réalisées de manière numérique. Autrement dit, on élude leur fabrication physique au profit d'une élaboration virtuelle en 3D telle que celle de la figure 4.

Dans ces cas, la maquette 1 1 , la cartographie 32 et la représentation 33 sont toutes numériques ou virtuelles, et pourraient être désignées par les mêmes termes et références.

On a succinctement représenté sur la figure 8 un équipement 35 apte à mettre en oeuvre l'invention.

Cet équipement 35 comporte, pour la production virtuelle de la cartographie 32 et de la représentation 33 (et éventuellement de la maquette 11), un système 36 numériseur 3D avec son logiciel dentaire, c'est-à-dire un système de conception assistée par ordinateur (C.A.O.)

Par exemple, l'équipement 35 comprend une station de type Multi-Dental proposée par la Société Multistation SA (voir site Internet : http://www.multistation.com).

Pour aboutir à la fabrication matérielle de jauges 14 personnalisées notamment, cet équipement 35 comporte également des moyens (37-38) de production de pièces.

Telle est la fonction d'une machine 37 de prototypage rapide incluse à l'équipement 35 et apte à produire par photocopie 3D des objets en cire ou analogues (et ensuite de fabriquer par moulage de pièces métalliques, comme exposé par exemple dans le document « Renfert Report 2007 - Idées pour la technique dentaire », voir site Internet : http://www.renfert.com).

En outre, cet équipement 35 possède ici une fraiseuse 38 à commande numérique à 5 axes, optimisée pour l'usinage de précision, et des systèmes 39 d'interface entre les composants (36-38) de l'équipement 35 notamment (connexions, réseaux, périphériques, etc.)

Ainsi, il est possible avec l'invention de fabriquer des jauges (14-16) à partir de flancs de tôle métalliques (usinés par la fraiseuse 38) ou encore à partir de moulages (produits par prototypage puis coulée via la machine 37). Comme on le verra, certaines jauges (14-16) sont obtenues par moulage et usinage.

Selon l'invention, la machine 37 tout comme la fraiseuse 38 travaillent directement à partir d'un modèle numérique issu du numériseur, c'est-à-dire typiquement à partir de la représentation 33.

Suivant l'invention, une fois le plan 34 localisé on procède à la recherche d'une courbure optimisée 40.

Selon le procédé, la phase de recherche de la courbure 40 optimisée s'effectue dans le plan 34 de passage, à partir d'une bibliothèque de courbes à symétrie antéropostérieure.

Evidemment, la recherche de cette courbure 40 prend en compte le matériau prévu pour l'arc 3 de l'appareillage 1, et en particulier le fait que cet arc 3 doit être uniformément conformé.

Par exemple, les courbes 40 de la bibliothèque sont des secteurs ou arcs géométriques de fonctions du second degré telles que cercle, ellipse, chaînette c'est-à-dire vélaire ou analogues.

La courbure 40 élue vient en contact avec les faces 21 linguales de la représentation 33 de la maquette 11 par au moins trois points (PI, P2 et P3, figure 5).

Dans une mise en oeuvre du procédé, la phase de recherche de la courbure 40 optimisée s'effectue à partir de l'exportation de données par exemple sous forme de fichier correspondant à la représentation 33 numérique de la maquette 11 vers un système de conception assistée par ordinateur au sein de l'équipement 35.

Ensuite, la phase de recherche effectue l'ancrage en mode projection dans le plan 34 de passage, d'abord de deux points P1 et P3 d'extrémité de la courbure 40 (sur la figure 5 à proximité de dents 9 antérieures telles que les canines).

Puis est opéré le placement virtuel du point P2 de rebroussement, à proximité de - voire sur - l'axe X de symétrie antéropostérieure de l'arcade (5 ou 6).

Le système de CAO attribut alors une courbure optimale issue de sa bibliothèque, passant par les points P1-P3 et épousant parfaitement les faces 21.

Ceci étant dit, reportons nous à la figure 6 afin de mieux décrire la structure d'une attache 2.

D'ores et déjà, on comprend que l'équipement 35 disposera en mémoire d'une cartographie 3D des ces attaches 2 -celle-ci pouvant bien sûr aisément être mise à jour, par exemple en fonction de nouveaux modèles d'attaches 2 que le praticien désire employer-.

Une telle structure d'attache 2 comporte comme on l'a vu, une gorge 180 qui est sur la figure 6 sensiblement étendue selon la direction Y transversale puisque la dent 9 sur laquelle cette attache 2 fixée par le tampon 23, est une incisive.

On voit bien sur la figure 6 que le plan de passage 34 est au même niveau suivant la direction d'élévation X, que d'une part (antérieurement) la courbure 40 optimisée qu'on nommera parfois aussi fil de construction.

D'autre part (c'est-à-dire postérieurement), l'arc 3 parfois nommé fil de traitement se trouve dans un plan confondu avec le plan 34 de passage, évidemment.

C'est dans ce plan 34, et sensiblement à angle droit par rapport à l'orientation longitudinale locale de ces courbure 40 et arc 3, qu'est définie une valeur 41 dite épaisseur utile de l'attache 2.

En fait, cette épaisseur utile 41 définit la distance entre la courbure 40 et le profil de l'arc 3 (ici suivant la direction antéropostérieure X). Elle (41) est imposée par le fabriquant de l'attache 2, ce qui distingue l'invention des techniques industrielles où typiquement cette cote est ajustée pour chaque couple attache-patient, c'est-à-dire sur mesure.

Avant de passer à la suite du procédé, remarquons au vu de la figure 6 que l'attache 2 possède une partie inférieure 42 dite base d'attache, qui sert d'une part (en élévation) d'embase à la structure entourant la gorge 180 ainsi qu'à un ou plusieurs préhenseurs 43 (aussi visibles sur la figure 7).

Avec l'invention, et selon les préférences ou contraintes imposées au praticien, les gorges 180 où l'arc 3 sera logé et retenu, sont de type auto-ligaturantes ou à ligaturer après insertion définitive de l'arc 3. Ceci constitue aussi l'un des avantages de l'invention, qui comme on le voit offre une multitude de possibilités au praticien et au prothésiste de laboratoire.

C'est contre une face 423 inférieure de cette base 42 d'attache qu'est disposé le tampon 23, dont on remarque la finesse, en comparaison avec les dimensions évoquées pour les collages conventionnels.

En fait, avec l'invention le tampon 23 retrouve une fonction initiale de fixation, et minimise celle que les techniques usuelles lui avaient ajoutée (i.e. de cale de rattrapage de jeu entre la face 423 de l'attache 2 et la face 21 d'une dent 9 à appareiller).

Donc, une fois les plan 34 de passage et la courbure 40 optimisée définis, il est aisé de calculer en fonction de l'épaisseur utile 41 de chaque attache 2, l'emplacement de destination de ces dernières (2).

Ici également, il est possible que des démarches incrémentales procèdent à l'ajustement fin des choix effectués pour le plan 34 de passage et la courbure 40 optimisée.

Ensuite, les attaches 2 sont virtuellement montées avec leurs gorges 180 en concordance avec la courbure 40 optimisée.

A partir de cette phase, il est alors aisé de produire un profil 300 (figure 5) de l'arc 3, par homothétie de la courbure 40 dans le plan 34 de passage localisé.

Ceci est schématiquement illustré par la flèche 44 sur la figure 5, qui tend à rapprocher la courbure 40 de l'intérieur de l'arcade (5 ou 6) à traiter, et ce d'une distance qui est fonction de l'épaisseur 41 utile (qui elle-même intègre le diamètre de l'arc 3 final à employer).

Autrement dit, ce profil d'arc 3 est produit en fonction de l'épaisseur 41 utile des attaches 2 au fond de gorge 180. Ce profil d'arc 3 permet de concevoir la rainure 17 de réception des attaches 2.

Puis, est conçu un modèle 45 virtuel de la jauge 14 antérieure, comme illustré sur la figure 8.

Ce modèle 45 intègre le profil d'arc 3 produit par homothétie précédemment, et est une représentation numérique ou virtuelle en 3D d'une jauge 14 à produire physiquement. Ce sont les données propres à ce modèle 45 qui sont transmises à l'équipement 35 pour produire physiquement les jauges nécessaires (14-16).

Bien qu'un tel modèle 45 présente des points communs avec les jauges classiques, on comprend que l'une de ses particularités découlant de l'invention, porte sur la forme « personnalisée » de la rainure 17 qui doit recevoir pour leur transfert, les attaches 2.

Ce modèle 45 va ensuite permettre qu'une jauge 14 antérieure soit physiquement fabriquée par production assistée par ordinateur, par exemple à l'aide de l'équipement 35.

Revenons brièvement à l'étape de montage virtuel des attaches 2, qui s'effectue évidemment à partir de données propres à chaque attache 2.

Ces données propres définissent au moins la disposition relative du fonds de la gorge 180 d'ancrage et de la face antérieure 423 (c'est-à-dire inférieure et intégrée à la base 42) de montage de cette attache 2 sur la face 21 linguale de destination.

Ce montage permettant de définir l'orientation autour d'un segment de réception de la courbure 40 de l'attache 2 en place, et donc de l'épaisseur 41 utile de cette attache 2.

Dans une réalisation, l'étape de production du profil de l'arc 3 s'opère à partir du choix d'un type de fil de traitement en termes de propriétés de son matériau constitutif, de ses dimensions (notamment diamètre) ainsi que de son mode de mise en forme.

L'homothétie 44 mise en oeuvre par l'équipement 35 dans les exemples est une homothétie de rapport en réduction, avec la construction d'un point P2 en retrait postérieurement suivant l'axe X de symétrie antéropostérieure, à une distance sensiblement égale à l'épaisseur 41 utile d'une attache 2 antérieure. Cette étape est ici opérée à l'aide du système de conception assistée par ordinateur de l'équipement 35.

Suivant le mode de réalisation des figures 5 et 8, l'étape de production du profil de l'arc 3 comporte l'intégration à un emplacement postérieur aux attaches 2 antérieures, des deux secteurs 25 et 26 linéaires raccordés (via les décrochements 27 et 28) à l'arc 3, de part et d'autre du plan de symétrie antéropostérieur.

Ici, ces secteurs linéaires 25 et 26 sont étendus en regard et au contact de représentations numériques de dents 9 postérieures.

Le procédé de l'invention comporte dans des mises en oeuvre, suite à l'étape de montage virtuel des attaches 2 en concordance avec la courbure 40 optimisée, une phase de solidarisation statique des données propres de ces attaches 2 avec celles déterminées à l'étape de production, pour le profil de l'arc 3.

En outre, dans des mises en oeuvre est prévue une phase d'ajustement fin, éventuellement incrémentale, de la situation de ces attaches 2 relativement à la représentation 33 numérique de la maquette 11.

Une telle phase d'ajustement fin comporte notamment ici un déplacement virtuel relatif des attaches 2 le nécessitant, en élévation (Z) principalement. C'est-à-dire qu'est opérée une remontée relative de ces attaches 2 (de quelques dixièmes de millimètres au plus, en général), voire un déplacement virtuel en ingression suivant l'axe X de symétrie antéropostérieur.

En pratique, il est parfois plus simple d'un point de vue calculatoire, que ce soit plutôt la représentation 33 qui soit descendu par rapport à l'ensemble complexe qui comporte les attaches 2.

Par exemple la phase d'ajustement fin opère un déplacement de l'ordre de 0.3 à 0.4 mm.

Selon des mises en oeuvre de l'invention, l'étape de conception de la jauge 14 frontale est obtenue en reproduisant la partie antérieure du profil de l'arc 3 avec une dimension radiale à proximité de ses extrémités distales (proches des dents 9 postérieures) qui est sensiblement identique à la dimension équivalente des gorges 180 des attaches 2 correspondantes.

Par exemple, cette dimension est de l'ordre de 0.18 à 0.22 inches, soit de l'ordre de 0.045 à 0.055 mm.

En se reportant à la figure 8, on voit que les jauges 14 à 16 de l'invention, possèdent classiquement des moyens 19 de fixation compatibles avec un paralléliseur 180 ou analogues. Chaque jauge 14 à 16 formant in fine une pièce unitaire, ces moyens 19 sont donc physiquement reliés au profil de l'arc 3.

Dans la mise en oeuvre de la figure 8, on voit que l'étape de conception de jauge 14 notamment, comporte l'insertion d'un marquage 46.

Ici, ces marquages 46 sont en forme d'orifices traversants, à distinguer de par leur fonction des simples perçages 20 des moyens 19.

Toujours sur la figure 8, les marquages 46 possèdent parfois un détrompeur 47, grâce auquel non seulement le positionnement des attaches 2 est guidé, mais qui permet également de s'assurer que la bonne attache 2 est disposée sur la rainure 17 à l'emplacement prévu.

Ces détrompeurs 47 possèdent chacun au moins une saillie complémentaire à des formes spécifiques de l'attache 2 correspondante.

Dans la jauge 14 de la figure 8, qui est fabriquée par usinage (ici à l'aide d'une fraiseuse 38 à commande numérique de l'équipement 35), ce détrompeur 47 en saillie complémentaire est réalisé par surmoulage de matière de part et d'autre en élévation (Z) des faces principales (c'est-à-dire du plan 34 suivant les directions X-Y) de la jauge 14.

Dans cet exemple, le détrompeur 47 possède un puits coulé qui s'étend de part et d'autre d'un orifice de la jauge 14, et assure la cohérence matérielle des deux parties (inférieure et supérieure) de surmoulages du détrompeur 47.

Dans d'autres réalisations, des détrompeurs 47 sont directement venus d'usinage ou de moulage (respectivement par les moyens 37 et 38), conjointement avec le corps de la jauge 14 à 16 qui les reçoit.

Bien sûr, chaque détrompeur 47 est apte à épouser des formes de l'attache 22, par exemple ce détrompeur surmoulé étant étendu de part et d'autre du plan de passage voire traversant un orifice de la jauge venue d'usinage

Selon des réalisations, il n'est prévu aucun détrompeur 47 en regard de l'emplacement d'au moins une voire de toutes les attache 2 à monter sur la jauge 14-16 donnée.

L'invention n'est néanmoins pas limitée aux modes de réalisation exposés. A l'inverse, elle comprend tous les équivalents des caractéristiques décrites.

## Revendications

1. Procédé de conception d'un appareillage (1) d'orthodontie du type comportant au moins deux attaches (2) prévues pour être rigidement fixées à des faces (21) linguales de dents (9) antérieures dont la position est à corriger, et un arc (3) auquel sont reliées ces attaches (2) ; ce procédé comprenant les étapes prévoyant de réaliser une cartographie (32) de la dentition à corriger ; puis à partir de cette cartographie (32), de produire une maquette (11) de simulation d'une position corrigée de la dentition ; les attaches (2) étant choisies au sein d'un catalogue d'attaches (2) prêtes à poser, et possédant chacune une gorge (180) d'ancrage destinée à recevoir l'arc (3) ;
**caractérisé en ce que** suite à la réalisation de la cartographie (32) ainsi que la maquette (11), sont opérées à partir d'une représentation numérique de la maquette (11), la localisation en élévation d'un plan (34) de passage des gorges (180) d'orientation prescrite ; ainsi que la recherche d'une courbure (40) optimisée ; les attaches (2) prêtes à poser étant alors virtuellement montées avec leur gorges (180) en concordance avec la courbure (40) ; un profil de l'arc (3) étant alors produit par homothétie (44) de la courbure (40) dans le plan (34) localisé, en fonction d'une épaisseur (41) utile des attaches (2) prêtes à poser au fond de gorge ; puis un modèle de jauge (14) antérieure est conçu avec le profil d'arc (3) produit par homothétie, avant que cette jauge (14) ne soit physiquement fabriquée par production assistée par ordinateur, à partir de ce modèle.

2. Procédé selon la revendication 1,
**caractérisé en ce que** la cartographie (32) ainsi que la maquette de simulation sont réalisées de manière numérique.

3. Procédé selon la revendication 1 ou 2,
**caractérisé en ce que** l'étape de réalisation de la cartographie (32) comporte une phase de saisie in vivo et / ou à partir d'un modèle physique tel que moulage, de la ou des arcades (5-6) à traiter, l'étape de réalisation de la cartographie (32) étant réalisée à l'aide d'une station de radiographie et / ou d'un numériseur 3D (36) contrôlé par un logiciel de conception assisté par ordinateur.

4. Procédé selon l'une des revendications 1 à 3,
**caractérisé en ce que** l'étape de réalisation de la cartographie (32) comporte une phase d'individualisation des dents (9) de l'arcade (5-6), l'étape de réalisation de la cartographie (32) étant réalisée avec l'attribution d'un repère (10) propre à chaque dent (9) impliquée dans le traitement.

5. Procédé selon l'une des revendications 1 à 4,
**caractérisé en ce que** la phase de localisation du plan (34) de passage des gorges (180) en élévation sur la représentation numérique de la maquette (11), est opérée d'abord par détermination de trois points (P1-P2-P3) de franchissement de faces (21) linguales des dents (9) en fonction de l'encombrement des attaches (2) prêtes à poser ainsi que des efforts que ces attaches (2) sont appelées à exercer sur ces dents (9), puis par construction d'un plan (34) séquent à ces points (P1-P2-P3).

6. Procédé selon l'une des revendications 1 à 5,
**caractérisé en ce que** la phase de recherche de la courbure (40) s'effectue dans le plan (34), à partir d'une bibliothèque de courbes à symétrie antéropostérieure et suivant lesquelles le matériau de l'arc (3) de l'appareillage (1) peut être uniformément conformé, ces courbes comportent des arcs de fonctions du second degré vélaires ou analogues ; la courbure (40) élue venant en contact avec les faces (21) linguales de la représentation de la maquette (11) par au moins trois points mitoyens à ces faces (21).

7. Procédé selon l'une des revendications 1 à 6,
**caractérisé en ce que** la phase de recherche de la courbure (40) optimisée s'effectue à partir de l'exportation de données par exemple sous forme de fichier correspondant à la représentation numérique de la maquette (11) vers un système de conception assistée par ordinateur, puis par l'ancrage en mode projection dans le plan (34) de passage, d'abord de deux points (P1-P3) d'extrémité de la courbure (40), puis d'un point (P2) de rebroussement à proximité de voire sur l'axe (X) de symétrie antéropostérieure de l'arcade (5-6).

8. procédé selon l'une des revendications 1 à 7,
**caractérisé en ce que** l'étape de montage virtuel des attaches (2) s'effectue à partir de données propres à chaque attache (2) prête à poser qui définissent au moins la disposition relative du fonds de gorge (180) et de la face antérieure (423) de base (42) de montage de cette attache (2) sur sa face (21) linguale de destination ; ce montage permettant de définir l'orientation autour d'un segment de réception de la courbure (40) de l'attache (2) prête à poser en place et donc à localiser l'épaisseur (41) utile de cette attache (41).

9. Procédé selon l'une des revendications 1 à 8,
**caractérisé en ce que** l'étape de production du profil d'arc (3) s'opère à partir du choix d'un type de fil de traitement en termes de propriétés de son matériau constitutif, de ses dimensions et de son mode de mise en forme, par homothétie (44) de rapport en réduction avec la construction d'un point en (P2) retrait postérieurement suivant l'axe (X) de symétrie antéropostérieure à une distance sensiblement égale à l'épaisseur (41) utile d'une attache (2) antérieure prête à poser; cette étape est opérée à l'aide d'un système de conception assistée par ordinateur.

10. Procédé selon l'une des revendications 1 à 9,
**caractérisé en ce que** l'étape de production du profil d'arc (3) comporte l'intégration postérieurement à l'emplacement d'attaches (2) antérieures prêtes à poser, d'un à trois secteurs linéaires (25-26) raccordés à l'arc (3), de part et d'autre du plan de symétrie antéropostérieur.

11. Procédé selon l'une des revendications 1 à 10,
**caractérisé en ce qu'**il comporte suite à l'étape de montage virtuel des attaches (2) prêtes à poser en concordance avec la courbure (40), une phase de solidarisation statique des données propres de ces attaches (2) prêtes à poser avec celles déterminées à l'étape de production pour le profil d'arc (3), puis une phase d'ajustement fin, éventuellement incrémentale, de leur situation relativement à la représentation numérique de la maquette (11) notamment par déplacement en élévation (Z) principalement par remontée, voire en ingression suivant l'axe (X) de symétrie antéropostérieur.

12. Procédé selon l'une des revendications 1 à 11,
**caractérisé en ce que** l'étape de conception de la jauge (14) frontale est obtenue en reproduisant la partie antérieure du profil d'arc (3) avec une dimension radiale à proximité de ses extrémités distales (P1-P3) qui est sensiblement identique à la dimension équivalente des gorges (180) correspondantes.

13. Procédé selon l'une des revendications 1 à 12,
**caractérisé en ce que** l'étape de conception de jauge (14-16) comporte l'insertion d'un marquage (46) tel qu'orifice traversant et / ou d'un détrompeur (47) tel que saillie complémentaire, en regard de l'emplacement d'au moins une voire de chaque attache (2) prête à poser à monter sur une jauge (14-16) donnée ; dans une jauge fabriquée par usinage, un détrompeur (47) en saillie complémentaire est réalisé par surmoulage apte à épouser des formes de l'attache (2) prête à poser ; ce détrompeur surmoulé est étendu de part et d'autre du plan (34) de passage ou traverse un orifice (46) de la jauge (14-16) venue d'usinage.

14. Procédé selon l'une des revendications 1 à 13,
**caractérisé en ce que** l'étape de fabrication de la jauge (14) frontale est opérée par moulage (37) et / ou usinage (38) assisté par ordinateur, en reproduisant le profil d'arc (3) à l'aide d'une station de prototypage 3D par moulage et / ou d'un centre d'usinage à commande numérique.

15. Equipement (35) de laboratoire d'orthodontie pour la mise en oeuvre du procédé selon l'une des revendications 1 à 14,
**caractérisé en ce qu'**il (35) comporte un système (36) numériseur de conception assistée par ordinateur, notamment pour les étapes de localisation d'un plan de passage et pour la conception de la courbure du profil d'arc, cet équipement (35) étant apte à permettre l'obtention d'un appareillage (1) d'orthodontie tel que des fonds de chacune des gorges (180) d'ancrage d'attaches (2) prêtes à poser de l'appareillage (1) d'orthodontie définissent un parcours ou tracé par secteurs ou arcs géométriques.

## Patentansprüche

1. Verfahren zur Konzipierung einer kieferorthopädischen Einrichtung (1), von dem Typ, welche mindestens zwei Befestigungen (2) aufweist, die vorgesehen sind, um fest an zungenseitigen Flächen (21) von Vorderzähnen (9), deren Stellung zu korrigieren ist, befestigt zu werden, und eine Spange (3) aufweist, an der diese Befestigungen (2) befestigt sind, wobei das Verfahren die Schritte aufweist, die vorsehen, eine Kartographie (32) des zu korrigierenden Gebisses zu erstellen, und dann ausgehend von dieser Kartographie (32) ein Modell (11) zur Simulation einer korrigierten Gebissstellung zu erzeugen, wobei die Befestigungen (2) aus einem Katalog montierfertiger Befestigungen (2) ausgewählt sind und jeweils eine Verankerungsrille (180) aufweisen, die dazu bestimmt ist, die Spange (3) aufzunehmen,
**dadurch gekennzeichnet, dass** nach der Erstellung der Kartographie (32) sowie des Modells (11), ausgehend von einer digitalen Darstellung des Modells, die höhenmäßige Lokalisierung einer Ebene (34) mit vorbestimmter Orientierung, in der die Rillen (180) verlaufen, erfolgt, sowie die Suche nach einer optimierten Krümmung (40), dann die montierfertigen Befestigungen (2) virtuell mit ihren Rillen (180) in Übereinstimmung mit der Krümmung (40) montiert werden, wobei eine Form der Spange (3) durch Homothetie (44) der Krümmung (40) in der lokalisierten Ebene (34) erzeugt wird in Abhängigkeit von einer nutzbaren Dicke (41) der montierfertigen Befestigungen (2) am Boden der Rille, dann eine vordere Prüfschablone (14) entworfen wird mit der Form der Spange (3), die durch Homothetie erzeugt wurde, bevor diese Prüfschablone (14) ausgehend von dieser Schablone durch eine computerunterstützte Herstellung erzeugt wird.

2. Verfahren nach Anspruch 1,
**dadurch gekennzeichnet, dass** die Kartographie (32) sowie das Simulationsmodell digital realisiert werden.

3. Verfahren nach Anspruch 1 oder 2,
**dadurch gekennzeichnet, dass** der Schritt der Erstellung der Kartographie (32) eine In-vivo-Erfassungsphase und/oder eine Erfassungsphase ausgehend von einem physischen Modell, wie einem Abdruck des zu behandelnden Kiefers oder der zu behandelnden Kiefer (5-6), beinhaltet, wobei der Schritt der Erstellung der Kartographie (32) mit Hilfe einer Röntgenanlage und/oder eines 3D-Scanners (36) erfolgt, gesteuert durch ein CAD-Programm.

4. Verfahren nach einem der Ansprüche 1 bis 3,
**dadurch gekennzeichnet, dass** der Schritt der Erstellung der Kartographie (32) eine Phase der Individualisation von Zähnen (9) des Kiefers (5-6) aufweist, wobei der Schritt der Erstellung der Kartographie (32) mit der Zuordnung einer Markierung (10) eines jeden Zahns (9), der an der Behandlung beteiligt ist, erfolgt.

5. Verfahren nach einem der Ansprüche 1 bis 4,
**dadurch gekennzeichnet, dass** der Schritt der höhenmäßige Lokalisierung der Ebene (34), in der die Rillen (180) verlaufen, in der digitalen Darstellung des Modells (11) zuerst ausgeführt wird durch die Bestimmung von drei Durchbruchspunkten (P1-P2-P3) der zungenseitigen Flächen (21) von Zähnen (9) in Abhängigkeit von dem Platzbedarf von montierfertigen Befestigungen (2) sowie von den Kräften, die diese Befestigungen (2) auf diese Zähne (9) ausüben sollen und dann durch die Konstruktion einer Ebene (34), in der diese Punkte (P1-P2-P3) liegen.

6. Verfahren nach einem der Ansprüche 1 bis 5,
**dadurch gekennzeichnet, dass** die Phase der Suche nach der Krümmung (40) in der Ebene (34) erfolgt, ausgehend von einer Bibliothek von Kurven mit anteroposteriorer Symmetrie und gemäß denen das Material der Spange (3) der Einrichtung (1) einheitlich angepasst werden kann, wobei diese Kurven Bögen in Form velarer Funktionen oder analoger Funktionen zweiten Grades aufweisen, wobei die ausgewählte Krümmung (40) in Kontakt tritt mit den zungenseitigen Flächen (21) der Darstellung des Modells (11) an mindestens drei gemeinsamen Punkten dieser Flächen (21).

7. Verfahren nach einem der Ansprüche 1 bis 6,
**dadurch gekennzeichnet, dass** die Phase der Suche nach der optimierten Krümmung (40) ausgehend von der Ausgabe von Daten, zum Beispiel in Form einer Datei, die der digitalen Darstellung des Modells (11) entspricht, an ein CAD-System, und dann durch Verankerung in einem Projektionsmodus in der Verlaufsebene (34) von zuerst zwei Endpunkten (P1-P3) der Krümmung (40) und dann eines Umkehrpunktes (P2) in der Nähe der, ja sogar auf der anteroposterioren Symmetrieachse (X) des Kiefers (5-6) erfolgt.

8. Verfahren nach einem der Ansprüche 1 bis 7,
**dadurch gekennzeichnet, dass** der Schritt der virtuellen Montage von Befestigungen (2) ausgehend von zu jeder montierfertigen Befestigung (2) gehörenden Daten erfolgt, die mindestens die relative Anordnung der Rillenböden (180) und der Vorderfläche (423) der Montagebasis (42) dieser Befestigung (2) auf ihrer zungenseitigen Zielfläche (21) definieren, wobei diese Montage es erlaubt, die Ausrichtung der Krümmung (40) der montierfertigen Befestigungen (2) um ein vorhandenes Aufnahmesegment herum zu definieren und somit die nutzbare Dicke (41) dieser Befestigung (2) zu bestimmen.

9. Verfahren nach einem der Ansprüche 1 bis 8,
**dadurch gekennzeichnet, dass** der Schritt der Erstellung der Form der Spange (3) erfolgt ausgehend von der Wahl eines Typs eines Behandlungsdrahtes gemäß den Eigenschaften des Materials, aus dem er besteht, gemäß seinen Abmessungen und der Art seiner Formgebung, durch Homothetie (44) des Reduktionsverhältnisses mit der Konstruktion eines Punktes (P2), der posterior zurückgesetzt ist entlang einer anteroposterioren Symmetrieachse (X) mit einem Abstand, der im Wesentlichen gleich der nutzbaren Dicke (41) einer anterioren montierfertigen Befestigung (2) ist, wobei dieser Schritt mit Hilfe eines CAD-Systems ausgeführt wird.

10. Verfahren nach einem der Ansprüche 1 bis 9,
**dadurch gekennzeichnet, dass** der Schritt der Erstellung der Form der Spange (3) am Ort der vorderen montierfertigen Befestigung (2) die posteriore Integration von ein bis drei linearen Abschnitten (25-26), die an der Spange (3) befestigt sind, zu beiden Seiten der anteroposterioren Symmetrieebene aufweist.

11. Verfahren nach einem der Ansprüche 1 bis 10,
**dadurch gekennzeichnet, dass** das Verfahren nach dem Schritt der virtuellen Montage der montierfertigen Befestigungen (2) in Übereinstimmung mit der Krümmung (40) eine Phase der statischen Verknüpfung von Eigendaten dieser montierfertigen Befestigungen (2) mit denen, die in dem Herstellungsschritt für die Form der Spangen (3) bestimmt wurden, und dann eine Phase der - gegebenenfalls schrittweisen - Feinjustierung ihrer Lage relativ an die digitale Darstellung des Modells, insbesondere durch Verschiebung in Höhenrichtung (Z), hauptsächlich durch Anheben, ja sogar Eindringen, entlang der anteroposterioren Symmetrieachse (X) aufweist.

12. Verfahren nach einem der Ansprüche 1 bis 11,
**dadurch gekennzeichnet, dass** der Schritt der Konzipierung der vorderen Prüfschablone (14) ausgeführt wird, indem der anteriore Bereich des Profils der Spangen (3) mit einer radialen Abmessung in der Nähe ihrer distalen Enden (P1-P3), die im Wesentlichen identisch ist mit der äquivalenten Abmessung der entsprechenden Rillen (180), reproduziert wird.

13. Verfahren nach einem der Ansprüche 1 bis 12,
**dadurch gekennzeichnet, dass** der Schritt der Konzipierung der Prüfschablone (14-16) das Einfügen einer Markierung (46), wie eines Durchgangslochs und/oder einer Kodierung (47), wie einen zusätzlichen Vorsprung, gegenüber der Lage mindestens einer, ja sogar jeder, montierfertigen Befestigung (2), die auf einer gegebenen Prüfschablone (14-16) anzubringen ist, umfasst, wobei bei einer durch spanende Bearbeitung hergestellten Prüfschablone eine vorstehende komplementäre Kodierung (47) durch Überformung erzeugt wird, wodurch die Kodierung die Formen der montierfertigen Befestigung (2) annehmen kann, wobei die überformte Kodierung sich zu beiden Seiten der Verlaufsebene (34) erstreckt, wo ein Loch (46) der durch spanende Bearbeitung hergestellten Prüfschablone (14-16) quert.

14. Verfahren nach einem der Ansprüche 1 bis 13,
**dadurch gekennzeichnet, dass** der Schritt der Herstellung der vorderen Prüfschablone (14) ausgeführt wird durch Formgießen (37) und/oder spanende Bearbeitung (38), unterstützt durch einen Rechner, in dem die Form der Spange (3) mit Hilfe einer 3D-Prototyping-Anlage durch Formguss und/oder durch eine numerisch gesteuerte Anlage zur spanenden Bearbeitung reproduziert wird.

15. Ausrüstung (35) eines Kieferorthopädielabors zur Durchführung des Verfahrens nach einem der Ansprüche 1-14,
**dadurch gekennzeichnet, dass** die Ausrüstung (35) ein CAD-Scanner-System (36) aufweist, insbesondere für die Schritte der Ortsbestimmung einer Verlaufsebene und zur Konzipierung der Krümmung der Form einer Spange, wobei diese Ausrüstung (35) das Erhalten einer kieferorthopädischen Einrichtung (1) erlaubt, derart, dass die Böden einer jeden der Rillen (180) zur Verankerung von montierfertigen Befestigungen (2) der kieferorthopädischen Einrichtung (1) einen Weg oder eine Trasse pro Abschnitt oder geometrischem Bogen definieren.

## Claims

1. A method for designing an orthodontic appliance (1) of the type comprising at least two brackets (2) which are intended to be rigidly fixed to lingual surfaces (21) of anterior teeth (9) the position of which is to be corrected and an archwire (3) to which these brackets (2) are connected; this method comprising the steps allowing for effecting mapping (32) of the dentition to be corrected; then, based on this mapping (32), producing a mock-up (11) of a corrected position of the dentition; the brackets (2) being selected from a catalogue of brackets (2) which are ready to be fitted, and each having an anchoring groove (180) intended to receive the archwire (3);
**characterised in that**, following the effecting of the mapping (32) and the production of the mock-up (11), there are carried out, based on a digital representation of the mock-up (11), the localisation in elevation of a pathway plane (34) of the grooves (180) of prescribed orientation; and also the seeking of an optimised curvature (40); the brackets (2) which are ready to be fitted then being virtually mounted with their grooves (180) in conformity with the curvature (40); a profile of the archwire (3) then being produced by homothetic transformation (44) of the curvature (40) in the localised plane (34), as a function of a useful thickness (41) of the brackets (2) which are ready to be fitted at the groove bottom; then an anterior gauge model (14) is designed with the profile of the archwire (3) produced by homothetic transformation before this gauge (14) is physically manufactured by computer-aided manufacturing, based on this model.

2. A method according to Claim 1,
**characterised in that** the mapping (32) and the mock-up are produced digitally.

3. A method according to Claim 1 or 2,
**characterised in that** the step of effecting the mapping (32) comprises an in vivo capture phase and/or based on a physical model such as moulding of the arch or arches (5-6) to be treated, the step of effecting the mapping (32) being effected using a radiography station and/or a 3D digitiser (36) controlled by computer-aided design software.

4. A method according to one of Claims 1 to 3,
**characterised in that** the step of effecting the mapping (32) comprises a phase of individualising the teeth (9) of the arch (5-6), the step of effecting the mapping (32) being effected with allocation of a marker (10) peculiar to each tooth (9) involved in the treatment.

5. A method according to one of Claims 1 to 4,
**characterised in that** the phase of localisation of the pathway plane (34) of the grooves (180) in elevation on the digital representation of the mock-up (11) is carried out first of all by determining three crossing points (P1-P2-P3) of lingual surfaces (21) of the teeth (9) as a function of the bulk of the brackets (2) which are ready to be fitted and also of the forces which these brackets (2) are required to exert on these teeth (9), then by constructing a plane (34) intersecting these points (P1-P2-P3).

6. A method according to one of Claims 1 to 5,
**characterised in that** the phase of seeking the curvature (40) takes place in the plane (34), based on a library of curves of anteroposterior symmetry and according to which the maternal of the archwire (3) of the appliance (1) can be uniformly shaped; these curves comprise arcs of second-degree functions which are velar or the like; the chosen curvature (40) coming into contact with the lingual surfaces (21) of the representation of the mock-up (11) via at least three points common to these surfaces (21).

7. A method according to one of Claims 1 to 6,
**characterised in that** the phase of seeking the optimised curvature (40) takes place based on the exporting of data for example in the form of a file corresponding to the digital representation of the mock-up (11) to a computer-aided design system, then by the anchoring in projection mode in the pathway plane (34), firstly of two end points (P1-P3) of the curvature (40), then of a cusp point (P2) close to or even on the anteroposterior axis (X) of symmetry of the arch (5-6).

8. A method according to one of Claims 1 to 7,
**characterised in that** the step of virtual mounting of the brackets (2) takes place based on data peculiar to each bracket (2) which is ready to be fitted, which data defines at least the relative arrangement of the bottom of the groove (180) and of the anterior surface (423) of the base (42) for mounting this bracket (2) on its destination lingual surface (21); this mounting making it possible to define the orientation about a segment for receiving the curvature (40) of the bracket (2) which is ready to be fitted in place and therefore to localise the useful thickness (41) of this bracket (41) [sic].

9. A method according to one of Claims 1 to 8,
**characterised in that** the step of producing the profile of the archwire (3) is carried out based on the selection of a type of treatment wire in terms of properties of its constituent material, its dimensions and the shaping method thereof, by homothetic transformation (44) of reducing ratio with the construction of a point at (P2) set back to the rear along the anteroposterior axis (X) of symmetry at a distance substantially equal to the useful thickness (41) of an anterior bracket (2) which is ready to be fitted; this step is effected using a computer-aided design system.

10. A method according to one of Claims 1 to 9,
**characterised in that** the step of producing the profile of the archwire (3) comprises the integration, to the rear of the site of anterior brackets (2) which are ready to be fitted, of one to three linear sectors (25-26) connected to the archwire (3), on either side of the anteroposterior plane of symmetry.

11. A method according to one of Claims 1 to 10,
**characterised in that** it comprises, following the step of virtual mounting of the brackets (2) which are ready to be fitted in conformity with the curvature (40), a phase of static linking of the data peculiar to these brackets (2) which are ready to be fitted with the data determined in the production step for the profile of the archwire (3), then a phase of fine, possibly incremental, adjustment of their situation relative to the digital representation of the mock-up (11) in particular by displacement in elevation (Z) mainly by raising, or even in ingression along the anteroposterior axis (X) of symmetry.

12. A method according to one of Claims 1 to 11,
**characterised in that** the step of designing the front gauge (14) is obtained by reproducing the anterior portion of the profile of the archwire (3) with a radial dimension close to its distal ends (P1-P3) which is substantially identical to the equivalent dimension of the corresponding grooves (180).

13. A method according to one of Claims 1 to 12,
**characterised in that** the step of designing the gauge (14-16) comprises the insertion of a marking (46) such as a through orifice and/or of a locating pin (47) such as a complementary protrusion opposite the site of at least one, or even of each, bracket (2) which is ready to be fitted which is to be mounted on a given gauge (14-16); in a gauge manufactured by machining, a complementary protruding locating pin (47) is produced by overmoulding capable of fitting to the forms of the bracket (2) which is ready to be fitted; this overmoulded locating pin is extended on either side of the pathway plane (34) or passes through an orifice (46) in the gauge (14-16) produced by machining.

14. A method according to one of Claims 1 to 13,
**characterised in that** the step of manufacturing the front gauge (14) is carried out by computer-aided machining (38) and/or moulding (37) by reproducing the profile of the archwire (3) using a 3D moulding prototyping station and/or a numerically controlled machining centre.

15. Orthodontic laboratory equipment (35) for implementing the method according to one of Claims 1 to 14,
**characterised in that** it (35) comprises a digitising computer-aided design system (36), in particular for the steps of localisation of a pathway plane and for designing the curvature of the archwire profile, this equipment (35) being capable of making it possible to obtain an orthodontic appliance (1) such that bottoms of each of the anchoring grooves (180) of brackets (2) which are ready to be fitted of the orthodontic appliance (1) define a course or trace by sectors or geometric arcs.
